# EUROPÄISCHE PATENTSCHRIFT

(11) **EP 0 673 825 B1**
(45) Veröffentlichungstag und Bekanntmachung des Hinweises auf die Patenterteilung: **07.04.2004**
(21) Anmeldenummer: 95101752.4
(22) Anmeldetag: 09.02.1995
(51) Int. Cl.: B62D 1/18

(54) **Verstellbare Lenkeinrichtung**
Adjustable steering apparatus
Appareil de direction réglable

(30) Priorität: 18.03.1994 DE 4409250; 20.04.1994 DE 4413798
(43) Veröffentlichungstag der Anmeldung: 27.09.1995
(73) Patentinhaber: Dr.Ing.h.c. F. Porsche Aktiengesellschaft, 70435 Stuttgart (DE)
(72) Erfinder: Rispeter, Siegfried, D-74353 Besigheim (DE)

(56) Entgegenhaltungen:
- EP-A- 0 231 453
- EP-A- 0 366 951
- EP-A- 0 477 509
- DE-A- 3 808 270
- DE-A- 3 914 608
- US-A- 2 836 988
- US-A- 4 317 387
- US-A- 5 009 120
- US-A- 5 078 022
- US-A- 5 143 402

## Beschreibung

Die Erfindung bezieht sich auf eine verstellbare Lenkeinrichtung nach dem Oberbegriff des Anspruchs 1.

Aus der US 5,009,120 ist eine axial verstellbare Lenksäule bekannt, bei der ein kopfseitig verzahntes Druckstück über einen federbelasteten Keil mit einer an einem Lenkschutzrohr außenseits angebrachten Verzahnung in Eingriff gebracht wird. Um eine stufenlose Einstellbarkeit zu erzielen weisen die Verzahnungen eine Steigung auf und das Druckstück ist zwischen seitlich angeodneten Keilen querverschieblich gehalten.

Eine verstellbare Lenkeinrichtung nach dem Oberbegriff des Anspruchs 1 ist aus der DE-A-39 14 608 bekannt, die eine Verriegelungseinrichtung für eine in Längsrichtung einstellbare Lenksäule zeigt, bei der zur Erzielung einer stufenlosen Einstellbarkeit zusätzliche Einrichtungen vorgesehen sind, die eine Ausrichtung des über einen Keil betätigten Rastelementes in Längsrichtung ermöglichen.

Ferner ist aus der EP-A-0 366 951 eine Lenksäule für Kraftfahrzeuge mit in Achsrichtung verstellbarer Lenkwelle bekannt Auf einem Mantelrohr sind hierzu zwei Abschnitte mit gleicher Zahnteilung vorgesehen und jedem Abschnitt ist ein um eine Querachse beweglich gelagertes Rastelement zugeordnet. Diese Rastelemente stehen mit Keilkörpem in Eingriff, die zwischen Rollen gelagert und über eine Druckfeder gegeneinander vorgespannt sind. In der vorgespannten Stellung halten die Keilkörper die Rastelemente in einer Lage innerhalb der Zähne am Mantelrohr und sichern somit eine Riegelstellung.

Die DE 42 05 929 Al zeigt eine Lenkvorrichtung, bei der im Rahmen einer elektrischen Verstellbarkeit der Lenksäule auch eine elektrisch betätigte, reibschlüssige Verriegelung der Position der Lenksäule vorgesehen ist. Zur reibschlüssigen Verriegelung wird mittels einer elektromotorisch betätigten Spindel ein keilförmiges Druckglied zwischen ein Druckanlageelement und eine schrägen Anlagefläche 28a einer die Lenksäuke längsverschieblich aufnehmenden Konsole geschoben, so daß das Druckanlageelement senkrecht auf eine Verschiebehülse der Lenksäule gepreßt wird und die Verschiebehülse reibschlüssig in der Konsole klemmt.

Schließlich ist aus der DE 34 09 988 C2 eine längsverstellbare Lenksäule bekannt, die auch bei Unfällen eine sichere Verriegelung bietet, Hierzu ist anstelle einer reibschlüssigen Verbindung zwischen zwei ineinander geschobenen, rohrförmigen Profilstäben an jedem der Profiilstäbe ein Verzahnungsteil vorgesehen. Eines dieser Verzahnungsteile wird durch zwei Keilelemente gesichert, von denen ein erstes Keilelement Bestandteil des Verzahnungsteiles und ein zweites Keilelement von einer Zugfeder in einer vorgespannten Stellung gehalten ist. Zum Lösen der Verzahnung kann zweite Keilelement durch einen Bowdenzug vom Fahrer entgegen der Zugkraft der Zugfeder bewegt werden.

Aufgabe der Erfindung ist es, ausgehend vom Stand der Technik nach der DE 39 14 608 A1 eine verbesserte verstellbare Lenkeinrichtung zu schaffen, die eine einfache und sichere axiale Verstellung und Festsetzung gewährleistet. Desweiteren soll nach weiteren Ausführungen ein optimiertes. Crashverhalten erzielt werden.

Die entgenannte Aufgabe wird erfindungsgemäß durch die kennzeichnenden Merkmale des Anspruchs 1 gelöst. Weitere vorteilhafte Merkmale beinhalten die jeweiligen Unteransprüche.

Mit der Erfindung wird außerdem erreicht, daß neben einer sicheren axialen Verstellung des von einer Lenkspindel getragenen Lenkrades, bei weiteren Ausführungsvarianten zusätzlich auch ein Deformationselement zur optimalen Energieabsorption integriert ist.

Die axiale Verstellung erfolgt im wesentlichen über ein Drucksegment einer Spannvorrichtung, die mittels einer Verzahnung mit einem Lenkschutzrohr zum Festsetzen in Eingriff steht und zum axialen Verschieben außer Eingriff bringbar ist.

Eine Energieabsorption bei einem Crash wird in vorteilhafter Ausgestaltung der Erfindung über ein Deformationselement in Form eines Wellrohres oder eines Stülprohres erzielt, das zwischen dem Drucksegment und einem unteren Ende eines das Lenkschutzrohr umgebenden Mantelrohres angeordnet ist.

In vorteilhafter Ausgestaltung ist das Drucksegment in einem Aufnahmering gehalten. Die Betätigung der Spannvorrichtung bzw. des Drucksegments zur Einnahme einer Feststellung und einer Verschiebestellung erfolgt über ein Spannelement. Dieses ist mit einer Stellstange einer Handhabe verbunden und kann durch ein Verdrehen oder ein Verschieben verstellt werden, so daß die Lenkspindel in die Verschiebestellung oder die Festsetzstellung bringbar ist.

Eine vorteilhafte Anordnung des Drucksegments ist in Anspruch 2 angegeben, wobei die Lage des Drucksegments und des Spannelements im Anspruch 3 näher gekennzeichnet ist.

Vorzugsweise wirkt das Spannelement der Vorrichtung unmittelbar flächig auf das Drucksegment und ist über die Stellstange der Handhabe verdrehbar und/oder verschiebbar. Somit ist eine Verstellung bzw. ein Festsetzen der Lenkspindel in einfacher Weise durchführbar. Ein axiales Verschieben der Lenkspindel und somit eine Verstellung des Lenkrades in verschiedene Positionen zum Fahrer erfolgt in der Losstellung, bei der die Verzahnungen aufeinander gleiten, entsprechend einem Ratscheneffekt. Das Drucksegment wird über das federnde Spannelement im bevorzugten Aufnahmering in der Weise gehalten, daß bei einem axialen Verschieben der Lenkspindel bzw, des Lenkschutzrohres das Drucksegment aus der Verzahnung des Lenkschutzrohres gedrückt wird. Durch das federnde Spannelement wird die Zahn-auf-Zahnstellung vermieden.

Zur Verbindung der Stellstange mit der Handhabe kann am Spannelement ein Sechskant oder dergleichen vorgesehen sein.

Die Verstellung des Spannelementes kann manuell oder motorisch erfolgen, wobei bei der motorischen Verstellung am Armaturenbrett ein entsprechender Schalter vorgesehen ist, mit dem das axiale Verstellen ein- bzw, ausgeschaltet wird.

Zur Begrenzung der axialen Verschiebung ist im Lenkschutzrohr ein Längsschlitz vorzugsweise, vorgesehen, in den eine Anschlaghülse ragt und somit eine Ausgangs- und eine Endstellung fixierbar ist. Das Mantelrohr kann eine Einprägung aufweisen, deren Schulter bei Verstellung an der Lagerung des Druckstückes anschlägt.

Zur Energieaufnahme bei einem Crash ist vorzugsweise mit dem Stellelement ein Deformationselement verbunden, das sich am vorzugsweise vorgesehenen Aufnahmering für das Drucksegment abstützt. Das gegenüberliegende abgekehrte Ende des Deformationselementes ist an einem Lagerring gehalten, der über einen Sprengring am Mantelrohr festgesetzt ist. Das Deformationselement kann somit in einfacher Weise montiert werden, indem der Lagerring entfernt wird. Bei der Montage dient das vorgespannte Crashelement als Federelement-Toleranzausgleich - und hält die Montageteile unter Vorspannung (Geräuschfreiheit).

Der eigentliche Aufnahmeraum für die Stelleinrichtung im Mantelrohr weist gegenüber dem anschließenden Mantelrohr vorzugsweise einen größeren Durchmesser auf, wodurch sich in vorteilhafter Weise eine Abstützwand für den vorzugsweise vorgesehenen Aufnahmering und somit auch für das Deformationselement ergibt.

Die Lagerungen des Mantelrohres am Fahrzeugaufbau sind vorzugsweise so gewählt, daß die untere Lagerung etwa mittig des Deformationselements und zwischen beiden Lagerungen benachbart der unteren Lagerung des Stellelements vorgesehen ist.

Nach einer weiteren vereinfachten und kostengünstigeren Einrichtung ist das das Lenkschutzrohr umgebende äußere Mantelrohr mit einer Ausnehmung versehen, in welche das Drückstück zwischen nach außen vorragenden Wänden radial verschieblich gehalten ist Gleichfalls ist auch die Spannvorrichtung in diesen Wänden gelagert, so daß sich eine baulich einfache Lösung zur axialen Verstellung der Lenksäule ergibt. Ein Deformationselement ist bei dieser Einrichtung nicht vorgesehen.

Ausführungsbeispiele der Erfindung sind in einigen der Zeichnungen dargestellt und werden im folgenden näher beschrieben. Es zeigen:

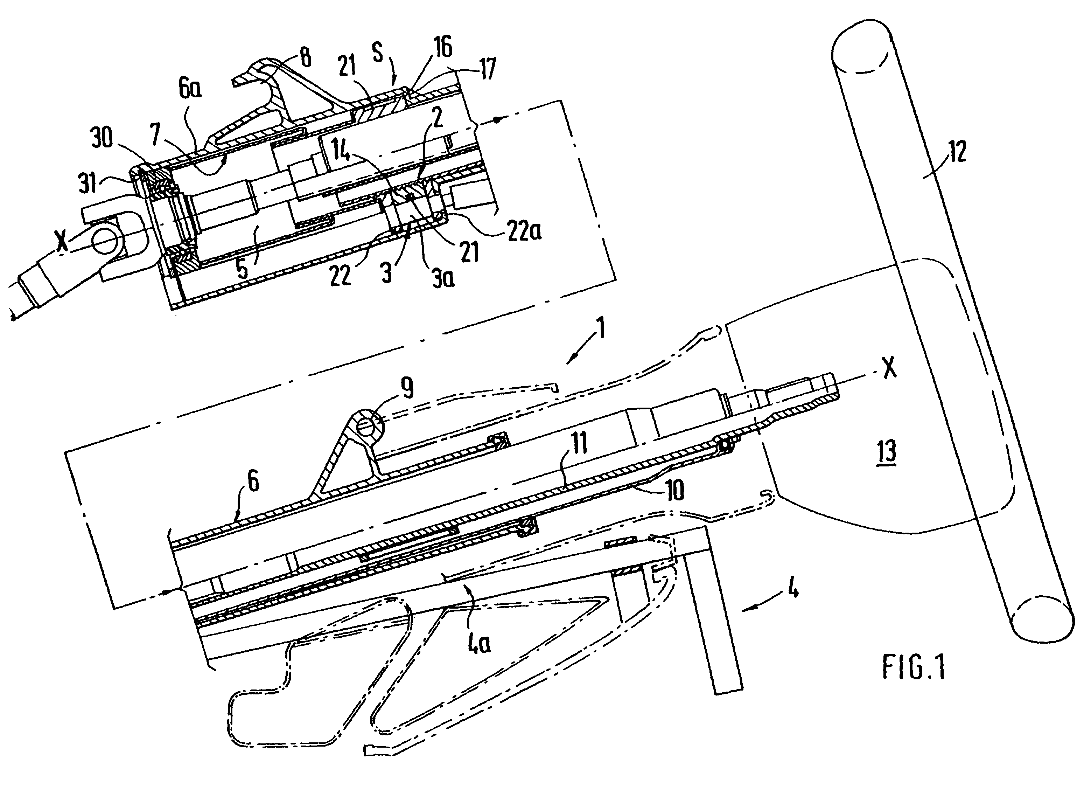

- Fig. 1: eine Lenksäule mit axialer Verstellvorrichtung, teilweise im Schnitt,

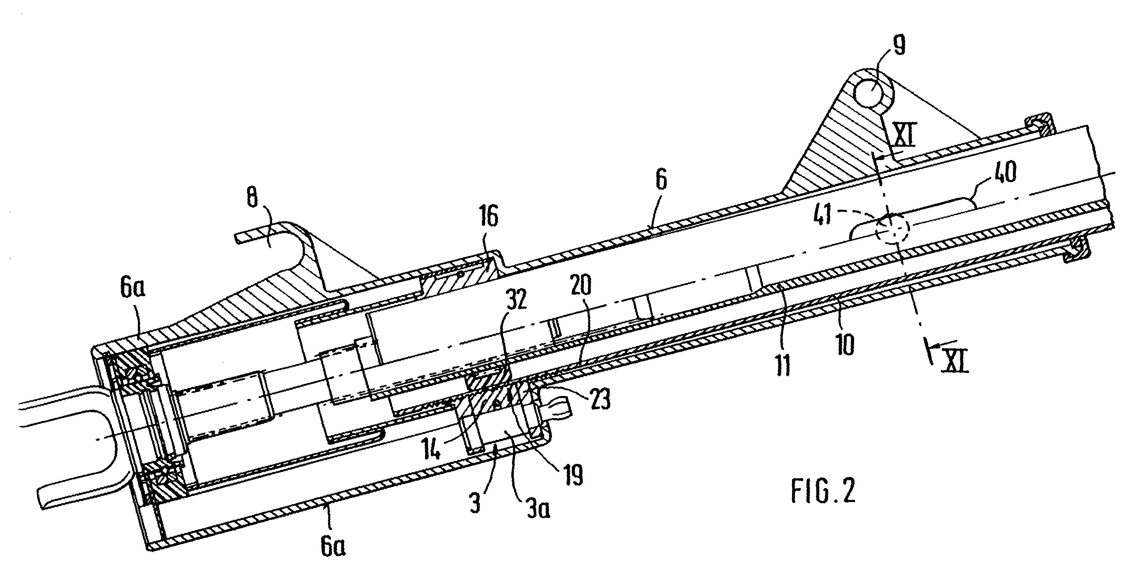

- Fig. 2.: eine vergrößerte Darstellung der Verstellvorrichtung gemäß Fig. 1,

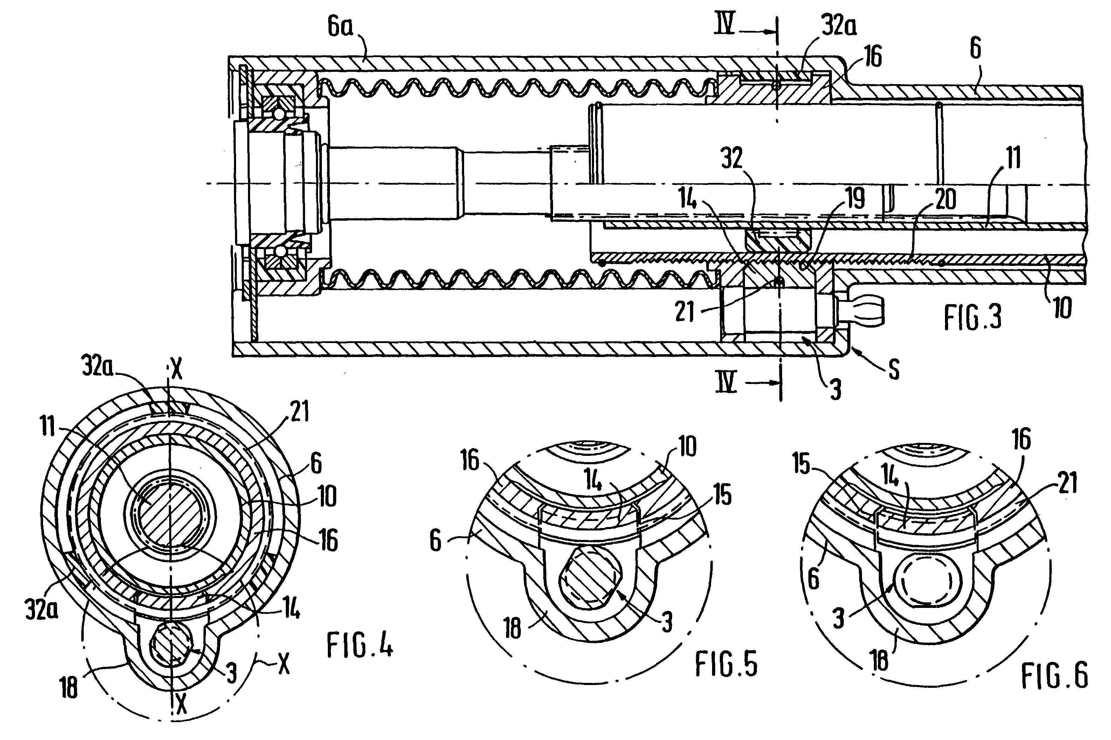

- Fig. 3: einen Schnitt durch ein Mantelrohr der Lenksäule mit einem als Wellrohr ausgebildeten Deformationselement und einer Spannvorrichtung mit einem Exzenterteil als Drucksegment, in vergrößerter Darstellung,
- Fig. 4: einen Schnitt nach der Linie IV-IV der Fig. 3,
- Fig. 5: eine vergrößerte Einzelheit X gemäß Fig. 4 in einer Festsetzstellung,
- Fig. 6: eine vergrößerte Einzelheit X in einer Verschiebestellung,
- Fig. 7: einen Schnitt durch ein Mantelrohr der Lenksäule mit einem als Stülprohr ausgebildeten Deformationselement und einer Spannvorrichtung,
- Fig. 8: eine Ausführung des Drucksegments als Kurvensegment mit Toleranzausgleich,
- Fig. 9: einen Schnitt nach der Linie IX-IX der Fig. 8, in vergrößerter Darstellung,
- Fig. 10: eine erfindungsgemäße Ausführung des Drucksegments als Kegelstück,
- Fig. 11: einen Schnitt durch die Lenksäule im Bereich eines Lagerschlitzes und einer Anschlaghülse,

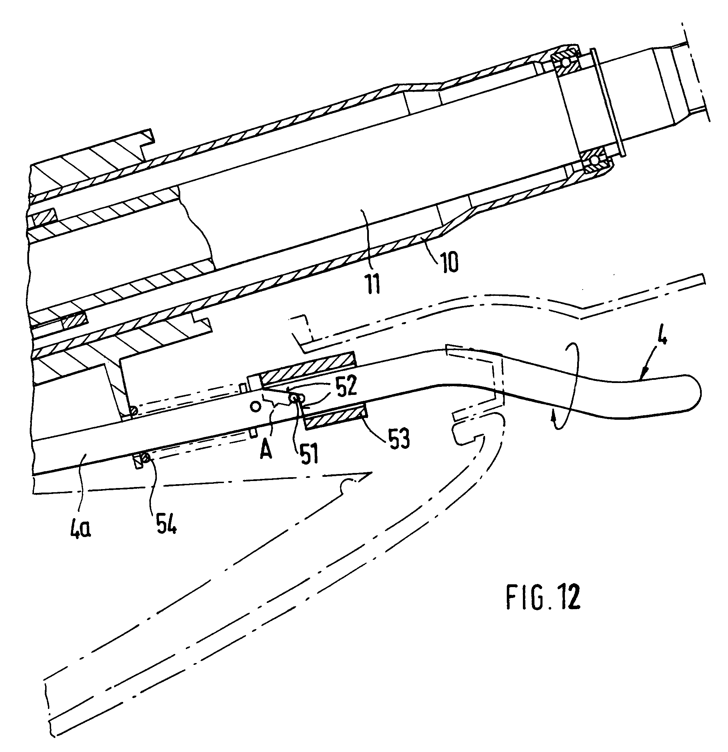

- Fig. 12: eine Seitenansicht auf die Stellstange der Handhabe mit Zwangsführung,
- Fig. 13: eine weitere Ausführung einer Lenksäule im Schnitt mit einer erfindungsgemäßen Verstelleinrichtung im Mantelrohr, und
- Fig. 14: einen Schnitt nach der Linie XV-XV der Fig. 13.

Eine verstellbare und energieabsorbierenden Lenkeinrichtung ist in einer Lenksäule 1 angeordnet und umfasst im wesentlichen ein Stellelement 2, eine druckausübende Spannvorrichtung 3 und eine mit dieser verbundene Stellstange 4a einer Handhabe 4. Diese Stelleinrichtung S kann in einem Aufnahmeraum 5 eines Mantelrohres 6, 6a gemeinsam mit einem Deformationselement 7 angeordnet sein. Das gesamte Mantelrohr 6 ist über mindestens zwei Lagerungen 8, 9 am Fahrzeugaufbau befestigt und es nimmt ein innenliegendes Lenkschutzrohr 10 sowie eine darin gehaltene Lenkspindel 11 auf, die endseitig ein Lenkrad 12 trägt. Im Lenkradkopf 13 kann zusätzlich zum Deformationselement 7 ein Airbag angeordnet sein. Die Lenkspindel 11 ist in Längsrichtung über Lager drehbar fest mit dem Lenkschutzrohr 10 verbunden.

Das Stellelement 2 besteht aus einem Drucksegment 14, welches in einer Ausnehmung 15 eines Aufnahmeringes 16 gehalten ist. Dieser Ring 16 ist auf dem Lankschutzrohr 10 angeordnet und stützt sich an einer radialen Ringwand 17 des im Durchmesser erweiterten Mantelrohrteiles 6a ab. Dieser Bereich des Mantelrohres 6 ist mit einer partiellen Erweiterung 18 zur Aufnahme der Spannvorrichtung 3 ausgeführt.

Das Drucksegment 14 weist eine Verzahnung 19 auf, die einer Verzahnung 20 des Lenkschutzrohres 10 zugerichtet ist Die Verzahnungen 19, 20 sind vorzugsweise quer zur Längsachse der Lenksäule 1 ausgerichtet. Über ein elastisch federndes Spannelement 21 wird das Drucksegment 14 am Aufnahmering 16 gehalten.

Mit dem Drucksegment 14 steht die Spannvorrichtung 3 in Wirkverbindung. Diese ist in Lageraugen 22, 22a des Aufnahmeringes 16 verdrehbar bzw. schiebbar gehalten.

Bei der erfindungsgemäßen Ausbildung der Stellvorrichtung 3 als Kegelstück 3c erfolgt über die Anpressung durch eine Feder 28 ein automatischer Toleranzausgleich. Bei diesem Kegelstück ist der Toleranzausgleich stufenlos.

Das axiale Verstellen der Lenksäule bzw. der Lenkspindel 11 mit Lenkrad 12 erfolgt durch Verdrehen der Handhabe 4, die über einen Sechskant oder dergleichen mit einem Stellhebel 4a verbindbar ist.

Bei der Verschiebestellung sind die Verzahnungen 19, 20 des Drucksegments 14 und des Lenkschutzrohres 10 über das Spannelement 21 nur in einem losen Eingriff zueinander, so daß das Lenkschutzrohr 10 gegenüber dem Drucksegment 14 verschoben werden kann. Die Verzahnungen 19, 20 gleiten hierbei aufeinander und es wird ein sogenannter Ratscheneffekt erzielt.

Bei der Festsetzstellung wird das Spannelement 3 verdreht und die Verzahnungen 19, 20 des Drucksegments 14 und des Lenkschutzrohres 10 stehen in Eingriff miteinander.

Die Spannvorrichtung 3 ist zu diesem Zweck in der Weise als Kegelstück 3c ausgeführt, so daß bei einer Verdrehung mit einem geringen Winkel entweder eine Spannung auf das Drucksegment 14 zur Erzielung der Festsetzstellung oder bei einem Weiter- oder Zurückdrehen die Spannung auf das Drucksegment 14 vermindert und die Verschiebestellung eingenommen wird.

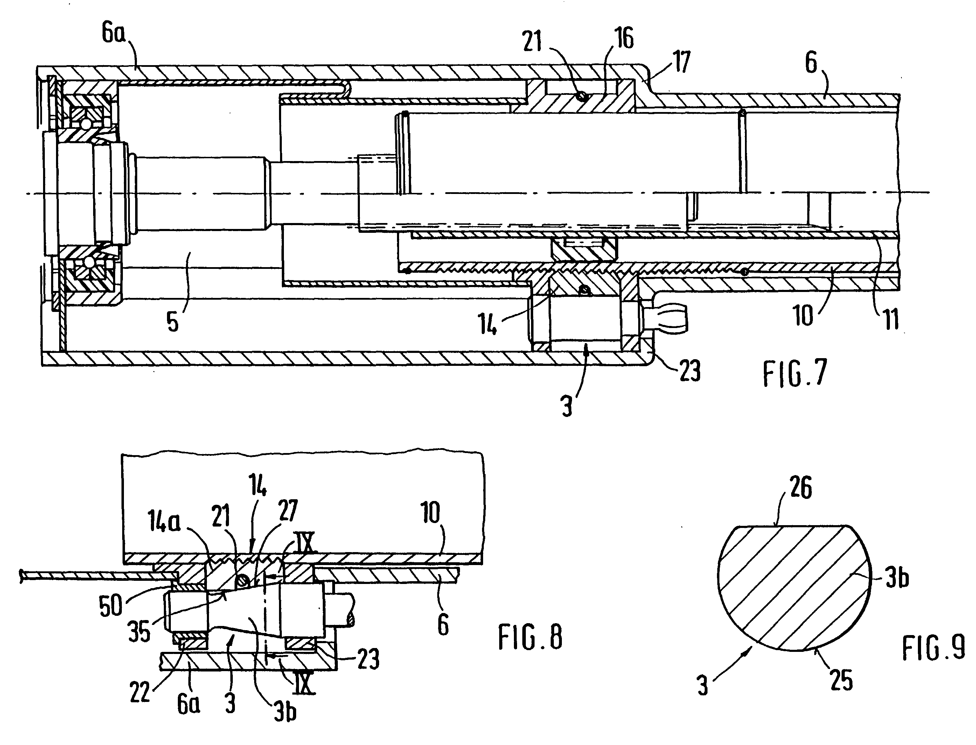

Wie in den Fig. 8 und 9 anhand des nicht erfindungsgemäßen Kurvenssegmentes 3b näher gezeigt, geht eine Kreisbogenbahn 25 in eine abgeflachte ebene Fläche 26 über, die dem Drucksegment 14 in der Verschiebestellung gegenübersteht, wobei die Kreisbogenbahn 25 des Drucksegments 14 in der Festsetzstellung mit einer Spannung beaufschlagt. Bei dieser Ausführung gemäß Fig. 8 weist das Drucksegment eine Schrägfläche 27 auf, die dann den Flächenabschnitten 25 und 26 gegenübersteht.

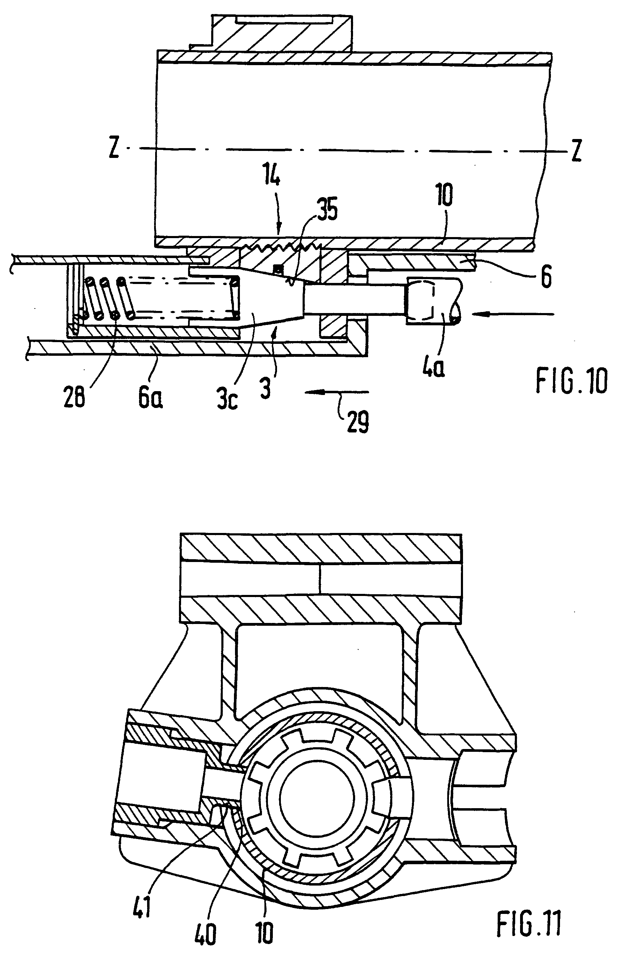

Nach der erfindungsgemäßen Ausführung gemäß Fig. 10 besteht die Spannvorrichtung 3 aus dem Kegelstück 3c, das unter der Spannung der Feder 28 in die Festsetzstellung gedrückt wird. Zur Erzielung einer Verschiebestellung wird das Kegelstück 3c in Pfeilrichtung 29 gegen die Feder 28 gedrückt, so daß das Drucksegment 14 von der Verzahnung 20 am Mantelrohr 10 freikommt. Auch dieses Drucksegment 14 weist eine Schrägfläche 27 auf. Das Drucksegment 14 kann auch eine solche Ausbildung aufweisen, daß es für die Verschiebestellung gegen die Spannung der Feder 28 gezogen statt gedrückt wird. Diese Ausführung ist nicht näher dargestellt.

Die Betätigung bzw. das Verschwenken der Spannvorrichtung 3 erfolgt entweder manuell über die Stellstange 4a der Handhabe 4 oder motorisch, wobei die Spannvorrichtung 3 dann mit einem ansteuerbaren Motor verbunden ist. Die Betätigung des Motors erfolgt über einen am Armaturenbrett angeordneten Schalter, über den dann die Verstellbewegung einleitbar ist.

Das Drucksegment 14 und die Spannvorrichtung 3 sind in einer senkrechten Mittenebene X-X der Lenksäule 1 angeordnet. Diese Ebene X-X verläuft benachbart der unteren Lagerung 8 des Mantelrohres 6 und zwischen den beiden Lagerungen 8 und 9. Die Lagerung 8 ist in etwa mittig des Deformationselementes 7 und mittig zwischen der Stellvorrichtung und einem unteren Lagerring 30 vorgesehen. Dieser ist über einen Sprengring 31 oder dergleichen im Mantelrohr 6, 6a festgesetzt. Der Lagerring 3D bildet gleichzeitig eine Aufnahme für die Lenkspindel 11 im Mantelrohr 6. Weitere radiale Lagerelemente 32 für die Lenkspindel 11 sind zwischen Aufnahmering 16 und Mantelrohr 6 vorgesehen.

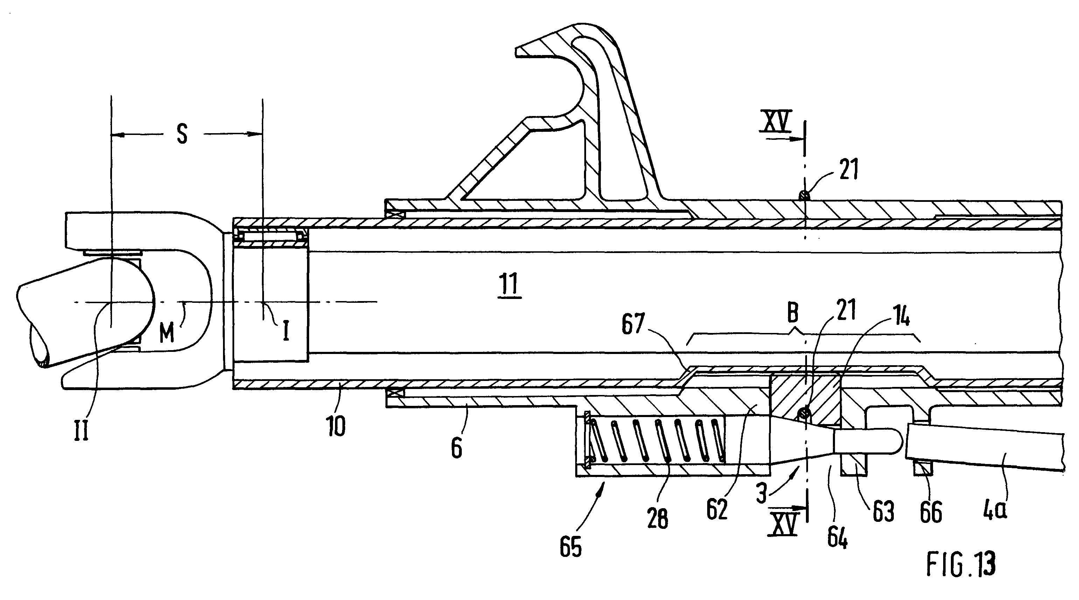

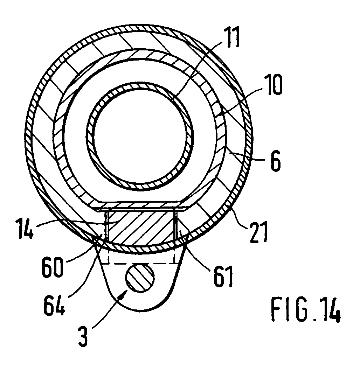

Nach einer weiteren erfindungsgemäßen Ausführung der Einrichtung gemäß der Fig. 13 und 14 ist die Stelleinrichtung im äußeren Mantelrohr 6 angeordnet Dieses weist eine Ausnehmung 64 auf, in welcher das Drucksegment 14 radial verschiebbar zwischen vorragenden Wänden 60 bis 63 gehalten ist.

Das Drucksegment 14 steht mit der Verzahnung 20 des Lenkschutzrohres 10 in Eingriff, die in einem eingedrückten Bereich B des Rohres 10 angeordnet ist. Diese Eindrückung 67 begrenzt gleichzeitig den Verstellweg S der Lenkspindel.

In Fig. 13 ist diese axiale Verstellung S dargestellt, wobei die Mittellage mit M bezeichnet ist und die maximale Ausfahrstellung mit II und die eingefahrene Stellung mit I dargestellt ist Das Drucksegment 14 steht in der gezeigten Stellung gemäß Fig. 13 in der Mittellage M.

In den gegenüberstehend und quer zum Mantelrohr 6 sich erstreckenden Wänden 62 und 63 ist die Stellvorrichtung 3 axial verschiebbar gelagert. An die Wand 62 schließt sich eine zylindrische Aufnahme 65 für das Federelement 28 an, die mit der Stelleinrichtung 3 in Eingriff steht Die Stellstange 4a ist mit ihrem einen Ende 67 in einem abgestellten Steg 66 gelagert.

## Patentansprüche

1. Verstellbare Lenkeinrichtung für Kraftfahrzeuge mit einer Spannvorrichtung (3), wobei
- eine Lenkspindel (11) in einem axial verschiebbaren Lenkschutzrohr (10) angeordnet ist,
- die Spannvorrichtung (3) ein das Lenkschutzrohr (10) haltendes und zum Verschieben freigebendes betätigbares Druckelement (14) aufweist, das eine dem Lenkschutzrohr (10) zugerichtete Verzahnung (19) aufweist, die durch ein federndes Spannelement (21) in korrespondierender Verbindung mit einer Verzahnung (20) des Lenkschutzrohres (10) steht, und
- die Spannvorrichtung (3) einen das Druckelement (14) beaufschlagenden Keilkörper (3c) umfasst, der unter der Spannung einer Druckfeder (28) steht, wobei die Druckfeder (28) den Keilkörper (3c) in einer Festsetzstellung kraftschlüssig am Druckelement (14) hält und in einer Verschiebestellung der Keilkörper (3c) entgegen der Spannung der Druckfeder (28) unter Freigabe des Druckelementes (14) verschiebbar ist,
**dadurch gekennzeichnet, dass**
- das Lenkschutzrohr (10) in mindestens einem Mantelrohr (6) angeordnet ist,
- das Druckelement als Drucksegment (14) ausgebildet ist und
- der Keilkörper aus einem Kegelstück (3c) besteht.

2. Verstellbare Lenkeinrichtung nach Anspruch 1, **dadurch gekennzeichnet, dass** das Drucksegment(14) in einer Ausnehmung (15) eines das Lenkschutzrohr (10) umgreifenden Aufnahmeringes (16) angeordnet ist.

3. Verstellbare Lenkeinrichtung nach Anspruch 1, **dadurch gekennzeichnet, dass** das Drucksegment (14) in einer Ausnehmung (64) des Mantelrohres (6) radial verschiebbar und die Spannvorrichtung (3) axial verstellbar in einer konsolartigen Aufnahme (65) gehalten ist.

4. Verstellbare Lenkeinrichtung nach Anspruch 3, **dadurch gekennzeichnet, dass** das Drucksegment (14) zwischen umgebenden Wänden (60, 61, 62 und 63), die vom Mantelrohr (6) nach außen abragen, umfassend gelagert ist.

5. Verstellbare Lenkeinrichtung nach Anspruch 4, **dadurch gekennzeichnet, dass** in den quer zum Mantelrohr (6) angeordneten gegenüberstehenden Wänden (62, 63) die Spannvorrichtung (3) angeordnet ist und dass an die eine Wand (62) sich eine zylindrische Aufnahme (65) für ein Federelement (28) anschließt.

6. Einrichtung nach Anspruch 2, **dadurch gekennzeichnet, dass** das Drucksegment (14) sowie der Aufnahmering (16) eine Haltenut für das federnde Spannelement (21) aufweist, welches in einem unmittelbaren Kontakt mit dem Drucksegment (14) steht.

7. Einrichtung nach einem oder mehreren der vorhergehenden Ansprüche, **dadurch gekennzeichnet, dass** das Drucksegment (14) und das federnde Spannelement (21) in einer gemeinsamen senkrechten Mittenebene der Lenkspindel (11) angeordnet sind.

8. Einrichtung nach einem oder mehreren der vorhergehenden Ansprüche, **dadurch gekennzeichnet, dass** das Drucksegment (14) sowie das Lenkschutzrohr (10) eine quer zur Achse des Lenkschutzrohres ausgerichtete Verzahnung (19, 20) aufweisen.

9. Einrichtung nach Anspruch 2 oder 6, **dadurch gekennzeichnet, dass** das Lenkschutzrohr (10) auf der Lenkspindel (11) einerseits über einen elastischen Lagerring (32) abgestützt ist und andererseits das Mantelrohr (6, 6a) über weitere elastische Lagerelemente (32a) am Aufnahmering (16) im Crashfall abgestützt ist.

10. Einrichtung nach Anspruch 2, 6 oder 9, **dadurch gekennzeichnet, dass** der Aufnahmering (16) mit seiner einen Stirnfläche an einer radialen Ringwand (23) des Mantelrohres (6) abgestützt ist und zwischen seiner gegenüberliegenden weiteren Stirnfläche und einem am freien unteren Ende des Mantelrohres (10) befestigten Lagerring (30) ein energieabsorbierendes Deformationselement (7) eingespannt gehalten ist.

11. Einrichtung nach einem oder mehreren der vorhergehenden Ansprüche, **dadurch gekennzeichnet, dass** die Spannvorrichtung (3) mit einer in die Festsetz- und Verschiebestellung des Drucksegments (14) verdrehbaren Handhabe (4, 4a) verbunden ist.

12. Einrichtung nach Anspruch 11, **dadurch gekennzeichnet, dass** das Kegelstück (3c) mit einer axial verschiebbaren Stellstange (4a) der Handhabe (4) derart verbunden ist, dass das Kegelstück (3c) parallel zur Längsachse der Lenkspindel (11) verschiebbar ist.

13. Einrichtung nach Anspruch 1 oder einem der vorhergehenden Ansprüche, **dadurch gekennzeichnet, dass** das Lenkschutzrohr (10) einen die axiale Verschiebebewegung der Lenkspindel (11) begrenzenden Längsschlitz (40) aufweist, in den eine Anschlaghülse (41) hineinragt.

14. Einrichtung nach einem oder mehreren der vorhergehenden Ansprüche, **dadurch gekennzeichnet, dass** das Mantelrohr (6) über mindestens zwei Lagerungen (8, 9) am Fahrzeugaufbau gehalten ist, wobei die eine Lagerung (8) an einem eine Stelleinrichtung (S) aufnehmenden erweiterten Bereich des Mantelrohres (6) vorgesehen und die Stelleinrichtung unmittelbar benachbart dieser Lagerung (8) angeordnet ist.

15. Einrichtung nach Anspruch 10 und 14, **dadurch gekennzeichnet, dass** die Lagerung (8) etwa mittig des Deformationselements (7) zwischen dem Aufnahmering (16) der Stelleinrichtung (5) und dem Abstützring (30) für das Element (7) angeordnet ist.

16. Einrichtung nach einem der Ansprüche 10 bis 15, **dadurch gekennzeichnet, dass** das Deformationselement (7) unter Vorspannung zwischen dem Lagerring (30) und dem Aufnahmering (16) angeordnet ist.

17. Einrichtung nach Anspruch 12, **dadurch gekennzeichnet, dass** die Stellstange (4a) der Handhabe (4) über einen Stift (51) an einer Führungsbahn (52) eines Halteelements (53) in die Festsetz- und Verschiebestellung verschwenkbar ist.

18. Einrichtung nach Anspruch 17, **dadurch gekennzeichnet, dass** die Führungsbahn (52) zur Einnahme der Verschiebestellung ansteigend (Bereich A) ausgeführt ist.

19. Einrichtung nach Anspruch 17 oder 18, **dadurch gekennzeichnet, dass** die Stellstange (4a) unter der Spannung einer Feder (54) gegen die Führungsbahn (52) gedrückt gehalten ist.

## Claims

1. An adjustable steering device for motor vehicles with a clamping device (3), wherein
- a steering spindle (11) is arranged in an axially displaceable steering-protection tube (10),
- the clamping device (3) comprises an actuable thrust element (14) which retains the steering-protection tube (10) and releases it for displacement and which has a set of teeth (19) which is directed towards the steering-protection tube (10) and which is connected in a corresponding manner by a sprung clamping element (21) to a set of teeth (20) of the steering-protection tube (10), and
- the clamping device (3) comprises a wedge member (3c) which acts upon the thrust element (14) and which is tensioned by a compression spring (28), wherein the compression spring (28) holds the wedge member (3c) in a fixed position on the thrust element (14) with positive locking and is displaceable in a displacement position of the wedge member (3c) against the tensioning of the compression spring (28) with the release of the thrust element (14),
**characterized in that**
- the steering-protection tube (10) is arranged in at least one casing tube (6).
- the thrust element is constructed in the form of a thrust segment (14), and
- the wedge member comprises a taper member (3c).

2. An adjustable steering device according to Claim 1, **characterized in that** the thrust segment (14) is arranged in a recess (15) in a receiving ring (16) which ring engages around the steering-protection tube (10).

3. An adjustable steering device according to Claim 1, **characterized in that** the thrust segment (14) is held in a recess (64) in the casing tube (6) in a radially displaceable manner, and the clamping device (3) is held in an axially displaceable manner in a bracket-like receiving means (65).

4. An adjustable steering device according to Claim 3, **characterized in that** the thrust segment (14) is mounted in an embraced manner between surrounding walls (60, 61, 62 and 63) which project outwards from the casing tube (6).

5. An adjustable steering device according to Claim 4, **characterized in that** the clamping device (3) is arranged in the opposed walls (62, 63) arranged transversely to the casing tube (6), and a cylindrical receiving means (65) for a spring element (28) adjoins one wall (62).

6. A device according to Claim 2, **characterized in that** the thrust segment (14) and the receiving ring (16) comprise a retaining groove for the sprung clamping element (21) which is in direct contact with the thrust segment (14).

7. A device according to one or more of the preceding Claims, **characterized in that** the thrust segment (14) and the sprung clamping element (21) are arranged in a common vertical median plane of the steering spindle (11).

8. A device according to one or more of the preceding Claims, **characterized in that** the thrust segment (14) and the steering-protection tube (10) have a set of teeth (19, 20) orientated transversely to the axis of the steering-protection tube.

9. A device according to Claim 2 or 6, **characterized in that** on one side the steering-protection tube (10) is supported on the steering spindle (11) by way of an elastic bearing ring (32) and on the other side the casing tube (6, 6a) is supported on the receiving ring (16) by way of further elastic bearing elements (32a) in the event of a crash.

10. A device according to Claim 2, 6 or 9, **characterized in that** the receiving ring (16) is supported with one of its end faces on a radial annular wall (23) of the casing tube (6), and an energy-absorbing deformation element (7) is held clamped between the other opposite end face of the said receiving ring (16) and a bearing ring (30) fastened to the free lower end of the casing tube (10).

11. A device according to one or more of the preceding Claims, **characterized in that** the clamping device (3) is connected to a handle (4, 4a) capable of being turned into the fixed and displacement position of the thrust segment (14).

12. A device according to Claim 11, **characterized in that** the taper member (3c) is connected to an axially displaceable adjustment rod (4a) of the handle (4) in such a way that the taper member (3c) is displaceable parallel to the longitudinal axis of the steering spindle (11).

13. A device according to Claim 1 or one of the preceding Claims, **characterized in that** the steering-protection tube (10) has a longitudinal slot (40) which limits the axial displacement movement of the steering spindle (11) and into which a stop sleeve (41) projects.

14. A device according to one or more of the preceding Claims, **characterized in that** the casing tube (6) is held on the vehicle body by way of at least two mountings (8, 9), wherein one mounting (8) is provided on an enlarged region of the casing tube (6) which receives an adjustment device (S) and the adjustment device is arranged directly adjacent to the said mounting (8).

15. A device according to Claim[s] 10 and 14, **characterized in that** the mounting (8) is arranged substantially in the centre of the deformation element (7) between the receiving ring (16) of the adjustment device (S) and the support ring (30) for the element (7).

16. A device according to one of Claims 10 to 15, **characterized in that** the deformation element (7) is arranged with pre-stressing between the bearing ring (30) and the receiving ring (16).

17. A device according to Claim 12, **characterized in that** the adjustment rod (4a) of the handle (4) is pivotable into the fixed and displacement position by way of a pin (51) on a guide path (52) of a retaining element (53).

18. A device according to Claim 17, **characterized in that** the guide path (52) is designed in an ascending manner (region A) in order to occupy the displacement position.

19. A device according to Claim 17 or 18, **characterized in that** the adjustment rod (4a) is held pressed against the guide path (52) under the tension of a spring (54).

## Revendications

1. Dispositif de direction réglable pour véhicule automobile comportant un dispositif de serrage (3), dans lequel
- une broche de direction (11) est disposée dans un tube de protection de direction (10) coulissant axialement,
- le dispositif de serrage (3) comporte un élément de pression (14) maintenant le tube de protection de direction (10) et actionnable pour autoriser son coulissement, lequel élément de pression comporte une denture (19) orientée vers le tube de protection de direction (10), qui, par un élément de serrage (21) faisant ressort, est en liaison correspondante avec une denture (20) du tube de protection de direction (10), et
- le dispositif de serrage (3) comprend un corps en coin (3c) agissant sur l'élément de pression (14) et qui est contraint par un ressort de pression (28), le ressort de pression (28) maintenant à force le corps en coin (3c) dans une position de blocage sur l'élément de pression (4), et dans une position de coulissement le corps en coin (3c) peut coulisser à l'encontre de la contrainte du ressort de pression (28), en libérant l'élément de pression (14),
**caractérisé en ce que**
- le tube de protection de direction (10) est disposé dans au moins un tube d'enveloppe (6),
- l'élément de pression est réalisé comme segment de pression (14), et
- le corps en coin est constitué d'une pièce conique (3c).

2. Dispositif de direction réglable selon la revendication 1, **caractérisé en ce que** le segment de pression (14) est disposé dans un évidement (15) d'une bague de réception (16) entourant le tube de protection de direction (10).

3. Dispositif de direction réglable selon la revendication 1, **caractérisé en ce que** le segment de pression (14) est maintenu de manière à pouvoir coulisser radialement dans un évidement (64) du tube d'enveloppe (6), et le dispositif de serrage (3) est maintenu déplaçable axialement dans un logement (65) de type console.

4. Dispositif de direction réglable selon la revendication 3, **caractérisé en ce que** le segment de pression (14) est monté enserré entre des parois (60, 61, 62 et 63) l'entourant qui dépassent vers l'extérieur du tube d'enveloppe (6).

5. Dispositif de direction réglable selon la revendication 4, **caractérisé en ce que** dans les parois (62, 63) opposées, disposées transversalement au tube d'enveloppe (6), est disposé le dispositif de serrage (3) et **en ce qu'**à une paroi (62) se raccorde un logement cylindrique (65) pour un élément à ressort (28).

6. Dispositif de direction réglable selon la revendication 2, **caractérisé en ce que** le segment de pression (14) ainsi que la bague de réception (16) présentent une rainure de maintien pour l'élément de serrage (21) faisant ressort, qui est en contact direct avec le segment de pression (14).

7. Dispositif selon une ou plusieurs des revendications précédentes, **caractérisé en ce que** le segment de pression (14) et l'élément de serrage (21) faisant ressort sont disposés dans un plan médian commun vertical de la broche de direction (11).

8. Dispositif selon une ou plusieurs des revendications précédentes, **caractérisé en ce que** le segment de pression (14) ainsi que le tube de protection de direction (10) présentent une denture (19, 20) orientée transversalement à l'axe du tube de protection de direction.

9. Dispositif selon la revendication 2 ou 6, **caractérisé en ce que** le tube de protection de direction (10) prend appui d'une part sur la broche de direction (11), par l'intermédiaire d'une bague de palier élastique (32), et d'autre part le tube d'enveloppe (6, 6a) est soutenu en cas de collision, par d'autres éléments de palier élastiques (32a), sur la bague de réception (16).

10. Dispositif selon la revendication 2, 6 ou 9, **caractérisé en ce que** la bague de réception (16) est soutenue, par l'une de ses faces frontales, contre une paroi annulaire radiale (23) du tube d'enveloppe (6), et un élément de déformation (7) absorbant l'énergie est maintenu serré entre son autre face frontale opposée et une bague de palier (30) fixée à l'extrémité inférieure libre du tube d'enveloppe (10).

11. Dispositif selon une ou plusieurs des revendications précédentes, **caractérisé en ce que** le dispositif de serrage (3) est relié à une manette (4, 4a) pouvant tourner dans la position de blocage et position de coulissement du segment de pression (14).

12. Dispositif selon la revendication 11, **caractérisé en ce que** la pièce conique (3c) est reliée à une tige de réglage (4a) pouvant coulisser axialement de la manette (4), de manière que la pièce conique (3c) puisse coulisser parallèlement à l'axe longitudinal de la branche de direction (11).

13. Dispositif selon la revendication 1 ou l'une des revendications précédentes, **caractérisé en ce que** le tube de protection de direction (10) présente une fente longitudinale (40) limitant le mouvement de coulissement axial de la branche de direction (11) et dans laquelle s'engage une douille de butée (41).

14. Dispositif selon une ou plusieurs des revendications précédentes, **caractérisé en ce que** le tube d'enveloppe (6) est maintenu sur la carrosserie du véhicule, par au moins deux supports (8, 9), un support (8) étant prévu dans une zone du tube d'enveloppe (6) élargie, recevant un dispositif de réglage (S), et le dispositif de réglage est disposé au voisinage immédiat de ce support (8).

15. Dispositif selon la revendication 10 et 14, **caractérisé en ce que** le support (8) est disposé approximativement au milieu de l'élément de déformation (7), entre la bague de réception (16) du dispositif de réglage (S) et la bague de palier (30) pour l'élément (7).

16. Dispositif selon l'une des revendications 10 à 15, **caractérisé en ce que** l'élément de déformation (7) est disposé avec précontrainte entre la bague de palier (30) et la bague de réception (16).

17. Dispositif selon la revendication 12, **caractérisé en ce que** la tige de réglage (4a) de la manette (4) peut pivoter dans la position de blocage et la position de coulissement, par un doigt (51), sur une voie de guidage (52) d'un élément de maintien (53).

18. Dispositif selon la revendication 17, **caractérisé en ce que** la voie de guidage (52) est réalisée montante (zone A) pour prendre la position de coulissement.

19. Dispositif selon la revendication 17 ou 18, **caractérisé en ce que** la tige de réglage (4a) est maintenue pressée contre la voie de guidage (52) par la contrainte d'un ressort (54).
